# EUROPÄISCHE PATENTSCHRIFT

(11) **EP 1 172 770 B1**
(45) Veröffentlichungstag und Bekanntmachung des Hinweises auf die Patenterteilung: **15.09.2004**
(21) Anmeldenummer: 00114802.2
(22) Anmeldetag: 10.07.2000
(51) Int. Cl.: G07C 9/00, G10L 17/00

(54) **Verfahren und System zur Authentifizierung eines Teilnehmers an einem Geschäftsvorgang**
Method and system for verifying a party of a business transaction
Méthode et système pour authentifier un participant à une transaction commerciale

(43) Veröffentlichungstag der Anmeldung: 16.01.2002
(73) Patentinhaber: VOICE.TRUST AG, 80637 München (DE)
(72) Erfinder: Kramer, Michael, 82313 Gauting (DE); Tacke, Jörg, 82319 Starnberg (DE)
(74) Vertreter: Kehl, Günther, Dipl.-Phys.

(56) Entgegenhaltungen:
- EP-A- 0 444 351
- EP-A- 0 454 363
- GB-A- 2 139 389
- US-A- 3 896 266
- US-A- 5 339 385
- US-A- 5 806 040

## Beschreibung

Die vorliegende Erfindung betrifft ein Verfahren sowie ein System zur Authentifizierung eines Teilnehmers an einem Geschäftsvorgang, beispielsweise im Rahmen des elektronischen Zahlungsverkehrs, durch Spracheingabe und Analyse von Stimmerkmalen durch einen Authentifizierungsdienstleister.

In den letzten Jahren gewinnen, nicht zuletzt aufgrund des umfassenden Einsatzes von elektronischen Datenverarbeitungsanlagen im Zahlungsverkehr und des großen Zuwachses von über das Internet abgewickelten Geschäften, dem sogenannten "e-commerce", verstärkt Systeme zur Identifizierung und/oder zur Authentifizierung von Personen vor der Durchführung von Geschäftsvorgängen zunehmend an Bedeutung. Die zumeist am Anfang eines entsprechenden Vorgangs erforderliche Identifizierung einer Person zielt darauf ab, die Identität der betreffenden Person festzustellen. Unter Authentifizierung ist im allgemeinen ein der Identifizierung nachgeschalteter Kontrollvorgang zu verstehen, mittels dessen überprüft wird, ob die von der Person im Rahmen der Identifizierung gemachten Angaben richtig sind; es handelt sich mithin gewissermaßen um eine Echtheitsprüfung bezüglich der betreffenden Person. Wird die Person hierbei als authentifiziert bewertet, so kann ihr eine Berechtigung beispielsweise zum Bestellen einer Ware, zum Tätigen einer Überweisung oder dergleichen erteilt werden. Ist das Resultat einer derartigen Authentifizierung hingegen, daß die Person unberechtigterweise Zugang zur Durchführung einer entsprechenden Transaktion ersucht, so wird ihr der Zugang verwehrt.

Beim elektronischen Zahlungsverkehr dient in den allermeisten Fällen - wenn nicht, wie unten beschrieben auf eine Authentifizierung vollkommen verzichtet wird - bislang eine sogenannte persönliche Identifikationsnummer (PIN) oder ein Kenn- bzw. Paßwort der Authentifizierung einer Person. Hierbei muß die um Zugang zu einer Anwendung oder Dienstleistung nachsuchende Person diese PIN bzw. dieses Kenn- bzw. Paßwort beispielsweise über die Tastatur eines Computerterminals eingeben. Das Prinzip des persönlichen Identifikations-Schlüssels, sei es in Form einer PIN oder eines Kenn- bzw. Paßworts, weist jedoch eine Reihe von Nachteilen auf, von denen einige in der Folge kurz dargelegt werden.

So muß das zumeist nicht kontextbezogene, sondern rein willkürlich vorgegebene Kenn- bzw. Paßwort oder die persönliche Identifikationsnummer von der betreffenden Person üblicherweise an einem vermeintlich sicheren Platz, beispielsweise auf einem Notizblock oder in einem Terminkalender, aufgeschrieben werden, da ansonsten die Gefahr besteht, daß die Person das Kenn- bzw. Paßwort oder die persönliche Identifikationsnummer im Laufe der Zeit vergißt. Dieses Aufschreiben des Kenn- bzw. Paßwortes oder der persönlichen Identifikationsnummer ist jedoch insofern riskant, als natürlich jederzeit die Gefahr des Verlustes des Notizblocks oder Terminkalenders besteht. Ein derartiger Verlust hat zur Folge, daß das Kenn- bzw. Paßwort oder die persönliche Identifikationsnummer für die Person unwiederbringlich verloren ist, so daß zumeist unter unverhältnismäßig großem verwaltungstechnischem und damit auch zeitlichem und oft finanziellen Aufwand die Registrierung eines neuen Kenn- bzw. Paßwortes oder einer neuen persönlichen Identifikationsnummer beantragt werden muß.

Zudem besteht die Gefahr des Mißbrauchs, wenn ein Dritter eine PIN oder ein Kenn- bzw. Paßwort erfährt, indem er beispielsweise den Inhaber bei deren Eingabe unbemerkt beobachtet oder Dokumente wie etwa Notizbücher oder Terminkalender, in denen gemeinhin derartige Kenn- bzw. Paßwörter oder persönliche Identifikationsnummern aufgeschrieben werden, stiehlt oder nach Verlust durch die berechtigte Person findet und unerlaubt verwendet.

Das Konzept des Kenn- bzw. Paßwortes oder der persönlichen Identifikationsnummer weist jedoch noch weitere grundlegende Mängel auf. So ist es für einen Unbefugten aufgrund der begrenzten Anzahl der innerhalb eines Kenn- bzw. Paßwortes oder einer persönlichen Identifikationsnummer zur Verfügung stehenden Buchstaben und/oder Ziffern prinzipiell möglich, durch wiederholtes Versuchen das Kenn- bzw. Paßwort oder die persönliche Identifikationsnummer zu erhalten. Diese Gefahr besteht vor allem vor dem Hintergrund, daß es die technischen Möglichkeiten heutzutage erlauben, Kenn- bzw. Paßwörter oder persönliche Identifikationsnummern durch Computerprogramme ermitteln zu lassen. Weiterhin besteht die Gefahr, derartige Authentifizierungs-Schlüssel bei der Datenübertragung, beispielsweise im Internet, elektronisch "erspäht" werden.

Beim Bestellen von Waren oder Dienstleistungen über das Internet ist eine heute übliche Zahlungsmethode die Abbuchung vom Kreditkartenkonto des Bestellers. Der Besteller gibt hierzu, sobald er die erwünschten Waren oder Leistungen in Form eines virtuellen sogenannten "Warenkorbs" zusammengestellt hat, üblicherweise seinen Namen, sein Kreditkarteninstitut, sowie Nummer und Gültigkeitsdatum seiner Kreditkarte ein. Eine Authentifizierung erfolgt nicht. Diese Prozedur ist zum einen für den Besteller unkomfortabel, da in aller Regel niemand seine normalerweise 16-stellige Kreditkartennummer auswendig weiß, zum anderen ist durch die fehlende Authentifizierung dem Mißbrauch Tür und Tor geöffnet: Jeder, der in Besitz eines Zahlungsbeleges (oder einer Kopie davon) eines mit einer Kredikarte getätigten Kaufs ist, hält alle notwendigen Informationen in Händen, um auf Kosten des Karteninhabers über das Internet zu bestellen. Gleiches gilt, wenn beispielsweise ein Bewohner desselben Haushalts wie der Karteninhaber dessen Kreditkarte für kurze Zeit unbemerkt entwendet.

Neben dem Einkauf von Waren, dem sogenannten "e-shopping", ist auch die Verwaltung von Wertpapierdepots über das Internet immer weiter verbreitet. Für gewöhnlich erfolgt die Authentifizierung des Depotinhabers beim Einloggen über die Eingabe einer PIN mit den obengeschilderten Nachteilen. Werden Transaktionen, wie etwa der Kauf oder Verkauf von Aktien, getätigt, so ist für jede Transaktion eine erneute Authentifizierung durch Eingabe einer neuen sogenannten TAN (Transaktionsnummer) erforderlich. Listen mit Transaktionsnummern, sogenannte TAN-Blöcke, werden von der depotführenden Bank oder dem depotführenden Online-Broking-Institut per Post zugesandt, sobald die Transaktionsnummern des zuvor benutzten TAN-Blocks größtenteils aufgebraucht sind, d.h. jeweils einmal benutzt wurden. Für den Depotinhaber ist die Handhabung der TAN umständlich. Er muß den gültigen TAN-Block bei sich haben, wenn er ein Wertpapiergeschäft tätigt. Da die jeweilige TAN nur einmal verwendet werden kann, muß er nach ihrer Benutzung diese ausstreichen. Geht ein TAN-Block verloren, oder sind alle Transaktionsnummern eines TAN-Blocks verbraucht noch bevor der Depotinhaber einen neuer TAN-Block erhalten hat, so kann der Depotinhaber bis zu dessen Eintreffen keine Online-Geschäfte mehr tätigen. Dies kann das Erleiden substantieller Verluste oder das Entgehen beträchtlicher Gewinne zur Folge haben.

Für den Nutzer der geschilderten oder ähnlicher Internet-Dienste würde es demnach einen beträchtlichen Zugewinn an Komfort und Sicherheit bedeuten, wenn eine in der Handhabung einfachere und zudem nicht mißbrauchsgefährdete Authentifizierungsmethode zur Verfügung stünde.

Um die vorgenannten Probleme zu überwinden, wurde in der Vergangenheit eine Reihe von Vorschlägen gemacht, die jedoch im praktischen Einsatz allesamt mehr oder minder deutlich zutagetretende Unzulänglichkeiten aufweisen. Hierbei ist in erster Linie der Einsatz von zusätzlichen Hilfsmitteln, sogenannter "Tokens", wie etwa Chipkarten, elektronischen Geräten und dergleichen zu nennen, die zwar eine relativ sichere und nur schwer manipulierbare Identifizierung und/oder Authentifizierung ermöglichen, jedoch unvorteilhafterweise stets mitgeführt werden müssen. Dieses Mitführen einer zusätzlichen Vorrichtung ist nicht nur umständlich, sondern birgt natürlich ebenfalls das Risiko des Diebstahls oder Verlustes in sich. Des weiteren erfordern derartige zusätzliche Vorrichtungen auch stets die Anordnung entsprechender Gerätschaften zum Lesen der Chipkarten und dergleichen, was die damit verbundenen Kosten weiter erhöht. Auch haben sich derartige Systeme in der Vergangenheit nicht selten als eher bedienerunfreundlich, kompliziert anwendbar oder störanfällig erwiesen. Gerade ein Versagen derartiger Systeme hat jedoch zumeist zur Folge, daß die Anwendung in ihrer Gesamtheit ausfällt und während dieser Ausfallzeit nicht mehr in Anspruch genommen werden kann.

Eine neuere Klasse von Authentifizierungsverfahren sind die sogenannten biometrischen Methoden, die sich der elektronischen Auswertung physiologischer Merkmale wie z.B. des Fingerabdrucks, des Iris-Musters des Auges oder der individuellen Merkmale der Stimme (des sogenannten "voiceprints") bedienen mit dem Vorteil, daß weder irgendwelche Karten oder sonstige Tokens mitgeführt werden müssen, noch das Auswendiglernen einer wie auch immer gearteten Kennung erforderlich ist. Die Erkennung von Fingerabdrücken oder Iris-Mustern ist jedoch wiederum an die Installation entsprechender Geräte mit damit verbundenem technischen und finanziellen Aufwand geknüpft. Für den Einsatz bei über das Internet abgewickelten Geschäftsvorgängen besteht zudem die Gefahr, daß die übertragenen Authentifizierungsdaten - seien es digitalisierte Bilder oder Stimmproben oder parametrisierte Daten aus der Bild- oder Stimmauswertung, unbemerkt aufgezeichnet und mißbräuchlich verwendet werden können. Bei der Verwendung von "voiceprints" besteht zudem die Gefahr des Mißbrauchs durch anderweitig beschaffte Aufzeichnungen von Stimmproben der berechtigten Person.

Aus der US 5,897,616 sind ein Verfahren und eine Vorrichtung zur Kontrolle des Zugangs zu einer Dienstleistung, d.h. beispielsweise zur Authentifizierung bei Bankgeschäften, bekannt, die auf der textunabhängigen Stimmerkennung beruhen, ergänzt durch Befragung des Zugangswilligen nach ihn identifizierenden Informationen, um Mißbrauch durch Verwendung von aufgezeichneten Stimmproben durch einen Dritten zu vermeiden.

Jedoch ist es aus Gründen der Diskretion oft unerwünscht, darüberhinaus auch zeitaufwendig, einen Kunden an einem Bankschalter, einer Kasse oder sonst in Gegenwart Dritter erst nach persönlichen Daten, wie etwa seinem Geburtsdatum oder dem Geburtsnamen seiner Schwiegermutter zu befragen, ehe eine Transaktion erfolgt. Außerdem ist aus Datenschutzgründen die Speicherung einer größeren Anzahl persönlicher, für den Geschäftsvorgang als solchen irrelevanter Daten häufig nicht legitim. Werden statt personenbezogener Daten Antworten abgefragt, die sich die Person zuvor merken muß, so tritt zum einen wieder das bereits für Paßwörter und PIN geschilderte Problem auf. Zudem kann die Menge der zu erfragenden Antworten in beiden geschilderten Fällen - personenbezogener wie auch memorierter Daten - nur relativ begrenzt sein, so daß auch hier theoretisch Stimmaufzeichnungen mißbräuchlich Verwendung finden könnten. Auch ist die Implementierung eines solchen Frage-und-Antwort-Algorithmus relativ aufwendig. Zudem gestaltet sich die Registrierung, d.h. die Hinterlegung der Referenzdaten eines künftig zu Authentifizierenden umständlicher.

Die Aufgabe der Erfindung besteht nun darin, ein Authentifizierungsverfahren für Geschäftsvorgänge bei einem Waren- oder Dienstleistungsanbieter, beispielsweise über das Internet, zu schaffen, das sich dadurch auszeichnet, daß zwar eine durch einen Dritten erschlichene, fehlerhafte Authentifizierung ausgeschlossen ist, jedoch weder eine Geheimnummer, ein Paßwort oder dergleichen noch ein Token, etwa in Form einer Magnet- oder Chipkarte, mit den bekannten Nachteilen benötigt wird. Ferner soll durch die Erfindung auf einen umständlichen Frage-und-Antwort-Algorithmus verzichtet werden können. Zudem soll das Verfahren mit vertretbarem Aufwand implementierbar sein.

Diese Aufgabe wird dadurch gelöst, daß ein Verfahren und ein System zur Authentifizierung eines Teilnehmers an einem Geschäftsvorgang - beispielsweise der Kauf einer Ware oder eine Wertpapiertransaktion - bei einem Waren- oder Dienstleistungsanbieter, beispielsweise über das Internet, durch Spracheingabe und Analyse von Stimmmerkmalen durch einen Authentifizierungsdienstleister (ADL) geschaffen wird, bei dem der zu authentifizierende Teilnehmer die Telefonnummer eingibt, unter welcher er augenblicklich erreichbar ist, diese an den ADL übermittelt wird, der unmittelbar danach über die angegebene Telefonnummer zurückruft und dem Teilnehmer eine Wortfolge übermittelt, der Teilnehmer die Wortfolge am Telefon nachspricht und zur Einleitung des Geschäftsvorgangs zugelassen wird, falls eine Sprach- und Stimmanalyse ergeben, daß sowohl die gesprochene mit der vorgegebenen Wortfolge übereinstimmt als auch die analysierten Stimmprobe und das beim ADL für den Teilnehmer als Referenz gespeicherte Stimmuster demselben Sprecher zugehören. Die Einleitung des Geschäftsvorganges umfaßt die sofortige Benachrichtigung des Anbieters hierüber.

Hierbei ist die Wortfolge dem Teilnehmer vor Beginn des Authentifizierungsvorgangs nicht bekannt und ändert sich für jeden erneuten Authentifizierungsvorgang, so daß nicht mißbräuchlich Sprachaufzeichnungen zur Authentifizierung verwendet werden können.

Ein Vorteil der Erfindung ist, daß das unbefugte Abhören oder Mitschneiden eines Authentifizierungsvorgangs kein Sicherheitsrisiko mehr darstellt, da sich die zur Authentifizierung nachzusprechende Wortfolge für jeden erneuten Authentifizierungsvorgang ändert.
Ein weiterer Vorteil der Erfindung ist, daß durch die Nutzung des Telefons, gegebenenfalls des Mobiltelefons, zur Eingabe der zur Authentifizierung dienenden Stimmprobe teilnehmerseitig keine aufwendigen Zusatzinstallationen, wie etwa ein Fingerabdruck-Scanner, erforderlich sind.

Darüberhinaus hat die Erfindung den Vorteil, daß sich der Registrierungsvorgang, d.h. der Vorgang der erstmaligen Hinterlegung einer Stimmprobe als Referenz-Stimmuster sehr einfach und zugleich äußerst sicher gestalten kann, beispielsweise telefonisch von einem Bank-, Post- oder Behördenschalter aus, nachdem man sich dort ausgewiesen hat. Das entsprechende Institut oder die entsprechende Behörde bestätigt den Registrierungsvorgang anschließend dem Authentifizierungsdienstleister. Auch ist beispielsweise eine telefonische Registrierung von zu Hause aus mit anschließender schriftlicher Bestätigung denkbar.

In einer vorteilhaften Ausführung der Erfindung ist die nachzusprechende Wortfolge ein Satz oder eine Satzfolge.

In einer weiteren vorteilhaften Ausführung der Erfindung wird zusätzlich eine der Identifizierung dienende Teilnehmerkennung, vorzugsweise der Name des Teilnehmers vom Teilnehmer zum Authentisierungsdienstleister, vorzugsweise durch Spracheingabe, übermittelt.

In einer weiteren vorteilhaften Ausführung der Erfindung ist der Authentifizierungsdienstleister unabhängig vom einzelnen Waren- oder Dienstleistungsanbieter. Für letzteren hat dies den Vorteil, daß er kein eigenes Authentifizierungssystem implementieren muß, sondern die Authentifizierung seiner Kunden kostengünstig als externe Dienstleistung in Anspruch nehmen kann. Für den Teilnehmer bedeutet es zudem ein wesentlich erhöhtes Maß an Komfort, wenn unterschiedliche Waren- und Dienstleistungsanbieter denselben Authentifizierungsdienst nutzen, da er sich somit nicht bei jedem dieser Anbieter einzeln registrieren lassen muß, sondern eine einmalige Registrierung beim Authentifizierungsdienstleister genügt.

In einer weiteren vorteilhaften Ausführung der Erfindung sind die für den Geschäftsvorgang erforderlichen kundenspezifischen Daten, beispielsweise die Nummer des zu belastenden Kreditkartenkontos, beim Authentifizierungsdienstleister hinterlegt und werden von diesem nach erfolgreicher Authentifizierung an den Anbieter übermittelt. Der Authentifizierungsdienstleister fungiert dann gewissermaßen als virtuelle Kreditkarte. Auch können vorteilerhafterweise Angaben wie allgemeine Einkaufsbedingungen übermittelt werden. Für den Kunden bedeutet dies einen beträchtlichen Zugewinn an Komfort, da er die entsprechenden Daten nicht bei jedem Geschäftsvorgang erneut eingeben muß.

In einer weiteren vorteilhaften Ausführung der Erfindung ist der Authentifizierungsdienstleister mit dem Bank- oder Kreditkarteninstitut identisch, welches das im Rahmen des Geschäftsvorganges zu belastende Konto führt. Für einen Warenanbieter, beispielsweise im Internet, bedeutet dies wiederum, daß er vorteilhafterweise kein eigenes Authentifizierungssystem implementieren muß, sondern die Authentifizierung seiner Kunden für ihn kostengünstig durch deren Bank- oder Kreditkarteninstitut übernommen wird.

In einer weiteren vorteilhaften Ausführung der Erfindung schickt der Authentifizierungsdienstleister nach erfolgter Zahlung eine entsprechende E-Mail oder Fax-Nachricht an den Teilnehmer.

In einer weiteren vorteilhaften Ausführung der Erfindung werden alle Daten zwischen dem Teilnehmer und dem Authentisierungsdienstleister über ein Mobilfunknetz, vorzugsweise mit dem Mobiltelefon des Teilnehmers, übertragen.

Die vorliegende Erfindung wird im folgenden unter Zuhilfename der Zeichnungen beispielhaft näher erläutert. Hierbei zeigt
- Fig.1: eine schematische Darstellung eines Systems zur erfindungsgemäßen Authentifizierung eines Teilnehmers an einem Geschäftsvorgang bei einem Waren- oder Dienstleistungsanbieter
- Fig.2a, Fig.2b: eine in Form eines Ablaufplans schematisierte Darstellung der Abläufe bei der Authentifizierung im Rahmen einer erfindungsgemäßen Ausführungsform des Verfahrens
- Fig.3a, Fig.3b: eine in Form eines Ablaufplans schematisierte Darstellung der Abläufe bei der Authentifizierung im Rahmen einer weiteren erfindungsgemäßen Ausführungsform des Verfahrens

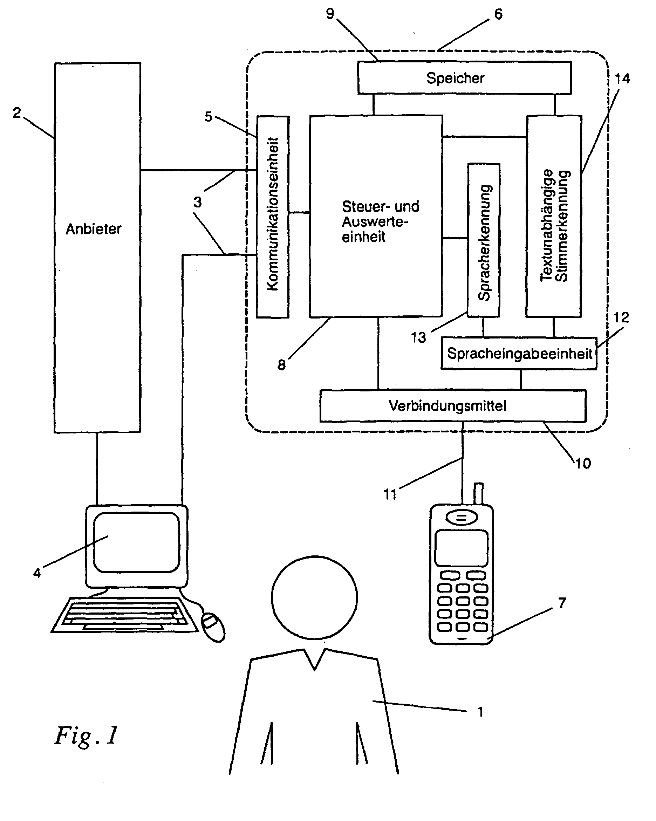

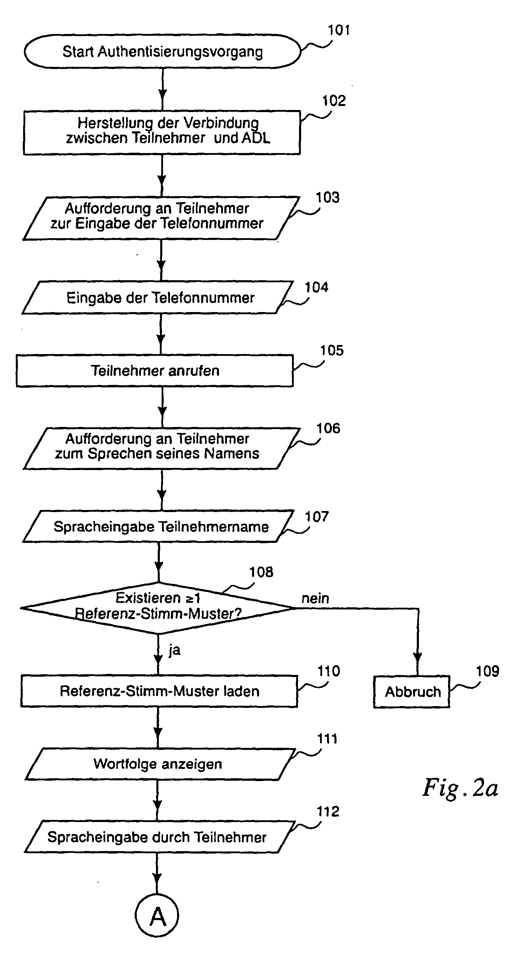

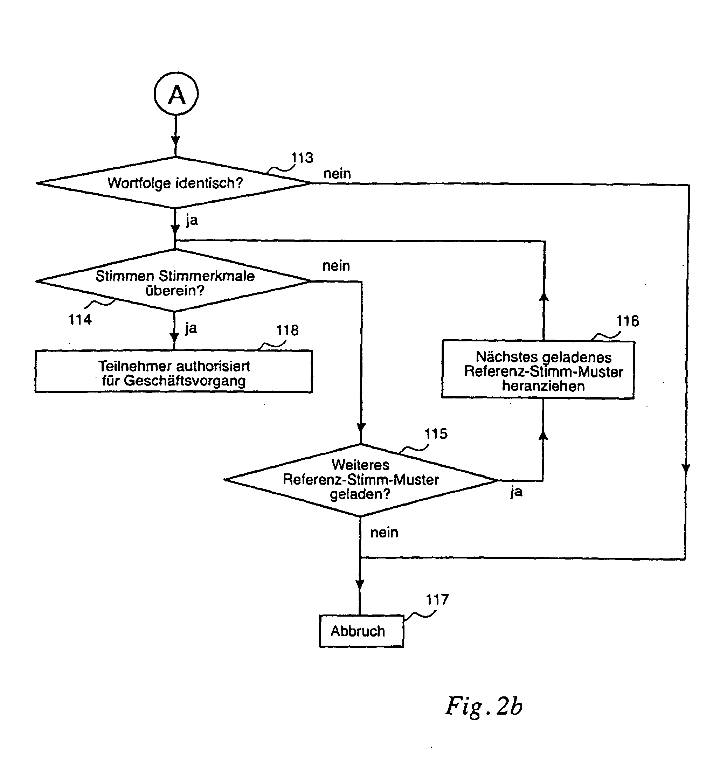

Beschrieben wird die Authentifizierung des Teilnehmers 1 an einem Geschäftsvorgang bei einem Waren- oder Dienstleistungsanbieter 2 mit Hilfe des in Fig.1 schematisch dargestellten erfindungsgemäßen Systems nach dem in Fig.2a und 2b schematisch dargestellten Ablauf einer erfindungsgemäßen Ausführungsform des Verfahrens. Nach Start des Authentifizierungsvorgangs (Schritt 101 in Fig.2a) wird über ein Kommunikationsnetzwerk 3 eine Verbindung zwischen einer Terminaleinheit 4 und einer Kommunikationseinheit 5 des Authentifizierungsdienstleisters 6 (ADL) hergestellt (Schritt 102 in Fig.2a). Die Kommunikationseinheit 5 des ADL 6 fordert den Teilnehmer 1 über das Kommunikationsnetzwerk 3 durch eine entsprechende Ausgabe (Schritt 103 in Fig.2a) auf dem Bildschirm der Terminaleinheit 4 auf, die Nummer des Telefonanschlusses 7, unter welcher der Teilnehmer 1 augenblicklich erreichbar ist, einzugeben. Der Teilnehmer 1 gibt über die Terminaleinheit 4 diese Telefonnummer ein (Schritt 104 in Fig.2a), die daraufhin über das Kommunikationsnetzwerk 3 und die Kommunikationseinheit 5 an die Steuer- und Auswerte-Einheit 8 des ADL 6 übermittelt wird.

Der Teilnehmer 1 wird sofort durch ein Verbindungsmittel 10 des ADL 6 unter der zuvor eingegebenen Telefonnummer angerufen (Schritt 105 in Fig.2a) und aufgefordert, seinen vollen Namen (Vor- und Nachname) zu sprechen (Schritt 106 in Fig. 2a). Der Teilnehmer 1 spricht am Telefon 7 seinen vollen Namen (Schritt 107 in Fig. 2a), der über das Telefonnetz 11 übermittelt, vom Verbindungsmittel empfangen und von einer Spracheingabeeinheit 12 des ADL 6 digitalisiert wird. Eine beim ADL 6 implementierte Spracherkennung 13 überführt das digitalisierte Klangbild des Namens des Teilnehmers 1 in den Namen des Teilnehmers 1. Die Steuer- und Auswerte-Einheit 8 überprüft, ob ein im Speicher 9 abgelegtes Referenzstimmuster existiert, das dem angegebenen Namen zuordenbar ist (Schritt 108 in Fig.2a). Falls dies nicht der Fall ist, so wird das Authentifizierungsverfahren abgebrochen (Schritt 109 in Fig.2a) bzw. der Teilnehmer 1 mit einem Operator verbunden, der gegebenenfalls weitere Schritte, beispielsweise die Beseitigung technischer Probleme, einleitet. Existiert ein Referenzstimmuster im Speicher 9, das dem angegebenen Namen zuordenbar ist, so wird dieses Referenzstimmuster aus dem Speicher 9 geladen (Schritt 110 in Fig.2a). Existieren aufgrund von Namensgleichheiten mehrere Stimmuster, die dem Namen zuordenbar sind, so werden diese geladen. Da der Teilnehmers 1 seinen vollen Namen genannt hat, ist eine hohe Zahl an in Frage kommenden Stimmustern unwahrscheinlich.

Die Steuer- und Auswerte-Einheit 8 generiert eine dem Teilnehmer 1 zuvor nicht bekannte Wortfolge, die über die Kommunikationseinheit 5 und das Kommunikationsnetzwerk 3 zur Terminaleinheit 4 übermittelt und auf deren Bildschirm dargestellt wird (Schritt 111 in Fig.2a). Der Teilnehmer 1 spricht die Wortfolge am Telefon 7 als Stimmprobe nach (Schritt 112 in Fig.2a). Die über das Telefonnetz 11 übermittelte und vom Verbindungsmittel empfangene Stimmprobe wird von der Spracheingabeeinheit 12 des ADL 6 digitalisiert. Die beim ADL 6 implementierte Spracherkennung 13 analysiert, ob sich die digitalisierte Wortfolge aus denselben Wörtern in derselben Reihenfolge zusammensetzt wie die von der Steuer- und Auswerteeinheit 8 generierte Wortfolge (Schritt 113 in Fig.2b). Ist dies nicht der Fall, so wird das Authentifizierungsverfahren abgebrochen (Schritt 115 in Fig.2b) bzw. der Teilnehmer 1 mit einem Operator verbunden, der gegebenenfalls weitere Schritte, beispielsweise die Beseitigung technischer Probleme, einleitet. Andernfalls wird es fortgesetzt.

Eine beim ADL 6 implementierte textunabhängige Stimmerkennung 14 vergleicht die digitalisierte Wortfolge mit dem geladenen, bzw., falls aufgrund von Namensgleichheiten mehrere Stimmuster geladen wurden, dem ersten geladenen Referenzstimmuster in Hinblick auf für einen Sprecher charakteristische individuelle Stimmerkmale (Schritt 114 in Fig.2b). Ist die Übereinstimmung zwischen der digitalisierten Wortfolge und dem Referenzstimmuster des Teilnehmers 1 in Hinblick auf für einen Sprecher charakteristische individuelle Stimmerkmale kleiner als ein vorbestimmter Schwellenwert, so überprüft die Steuer- und Auswerte-Einheit 8 (Schritt 115 in Fig.2b) ob ein weiteres geladenes Referenzstimmuster existiert. Existiert kein weiteres geladenes Referenzstimmuster, so wird das Authentifizierungsverfahren abgebrochen (Schritt 117 in Fig.2b) bzw. der Teilnehmer 1 mit einem Operator verbunden, der gegebenenfalls weitere Schritte, beispielsweise die Beseitigung technischer Probleme, einleitet.

Ist die Übereinstimmung zwischen der digitalisierten Wortfolge und dem Referenzstimmuster des Teilnehmers 1 in Hinblick auf für einen Sprecher charakteristische individuelle Stimmerkmale zwar kleiner als ein vorbestimmter Schwellenwert, existieren jedoch weitere geladene Referenzstimmuster, so wird das nächste geladene Referenzstimmuster herangezogen (Schritt 116 in Fig.2b) und auf für einen Sprecher charakteristische individuelle Stimmerkmale (Schritt 114 in Fig.2b) untersucht. Gegebenenfalls wird diese Schleife mehrfach durchlaufen, bis entweder kein weiteres geladenes Stimmuster existiert oder die Übereinstimmung zwischen der digitalisierten Wortfolge und dem Referenzstimmuster des Teilnehmers in Hinblick auf für einen Sprecher charakteristische individuelle Stimmerkmale größer als ein vorbestimmter Schwellenwert ist.

Wenn die Übereinstimmung zwischen der digitalisierten Wortfolge und dem Referenzstimmuster des Teilnehmers in Hinblick auf für einen Sprecher charakteristische individuelle Stimmerkmale größer als ein vorbestimmter Schwellenwert ist, so wird der Teilnehmer 1 für den Geschäftsvorgang authorisiert (Schritt 118 in Fig.2b).

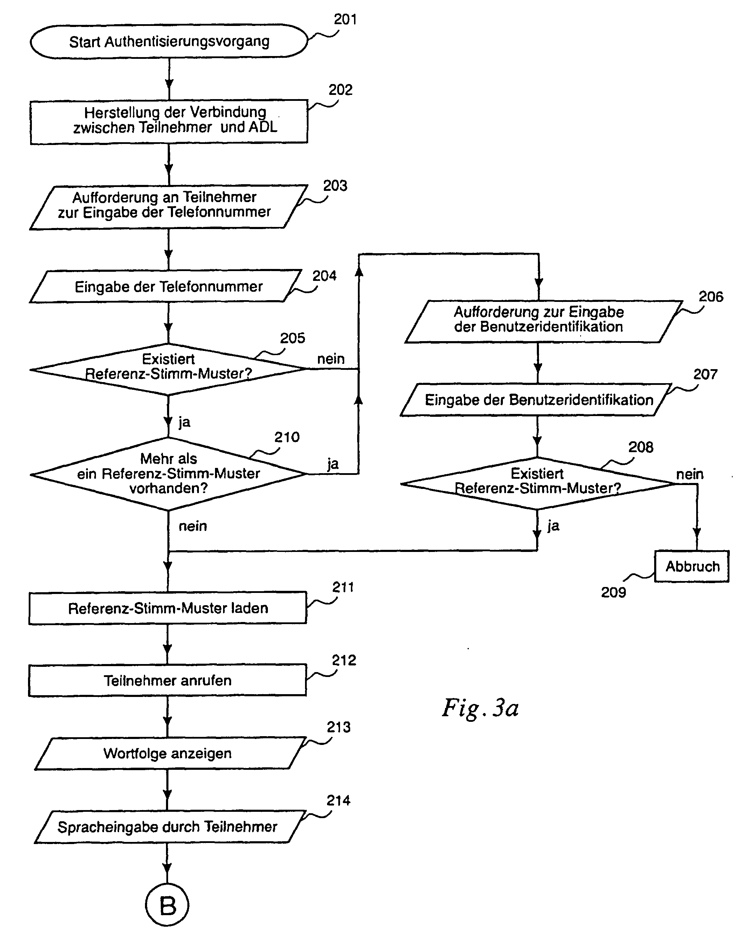

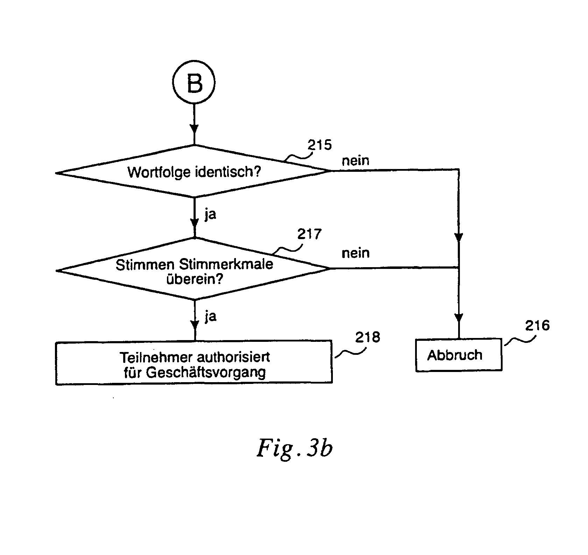

Als weiteres Ausführungsbeispiel beschrieben wird die Authentifizierung des Teilnehmers 1 an einem Geschäftsvorgang bei einem Waren- oder Dienstleistungsanbieter 2 mit Hilfe des in Fig.1 schematisch dargestellten erfindungsgemäßen Systems nach dem in Fig.3a und 3b schematisch dargestellten Ablauf einer weiteren erfindungsgemäßen Ausführungsform des Verfahrens, bei der die Identifikation des Teilnehmers 1 vor Laden des entsprechenden Referenzstimmusters auf Grundlage der eingegebenen Telefonnummer erfolgt. Nach Start des Authentifizierungsvorgangs (Schritt 201 in Fig.3a) wird über ein Kommunikationsnetzwerk 3 eine Verbindung zwischen einer Terminaleinheit 4 und einer Kommunikationseinheit 5 des Authentifizierungsdienstleisters 6 (ADL) hergestellt (Schritt 202 in Fig.3a). Die Kommunikationseinheit 5 des ADL 6 fordert den Teilnehmer 1 über das Kommunikationsnetzwerk 3 durch eine entsprechende Ausgabe (Schritt 203 in Fig.3a) auf dem Bildschirm der Terminaleinheit 4 auf, die Nummer des Telefonanschlusses 7, unter welcher der Teilnehmer 1 augenblicklich erreichbar ist, einzugeben. Der Teilnehmer 1 gibt über die Terminaleinheit 4 diese Telefonnummer ein (Schritt 204 in Fig.3a), die daraufhin über das Kommunikationsnetzwerk 3 und die Kommunikationseinheit 5 an die Steuer- und Auswerte-Einheit 8 des ADL 6 übermittelt wird. Die Steuer- und Auswerte-Einheit 8 überprüft, ob ein im Speicher 9 abgelegtes Referenzstimmuster existiert, das der angegebenen Telefonnummer zuordenbar ist (Schritt 205 in Fig.3a). Falls dies nicht der Fall ist, wird der Teilnehmer 1 über eine Anzeige (Schritt 206 in Fig.3a) auf dem Bildschirm des Terminals 4 zur Eingabe einer ihn identifizierenden Kennung aufgefordert. Diese Kennung muß im Gegensatz zu den einleitend beschriebenen Paß- und Kennwörtern nicht geheim bleiben und kann insofern offen und verlustsicher an vielerlei Stellen hinterlegt sein. Vorteilhafterweise handelt es sich bei der Kennung um den Namen des Teilnehmers 1. Der Teilnehmer 1 gibt über die Terminaleinheit 4 diese Kennung ein (Schritt 207 in Fig.3a), die daraufhin über das Kommunikationsnetzwerk 3 und die Kommunikationseinheit 5 an die Steuer- und Auswerte-Einheit 8 übermittelt wird. Die Steuer- und Auswerte-Einheit 8 überprüft, ob ein im Speicher 9 abgelegtes Referenzstimmuster existiert, das der angegebenen Kennung zuordenbar ist (Schritt 208 in Fig.3a). Falls dies nicht der Fall ist, so wird das Authentifizierungsverfahren abgebrochen (Schritt 209 in Fig.3a) bzw. der Teilnehmer 1 mit einem Operator verbunden, der gegebenenfalls weitere Schritte, beispielsweise die Beseitigung technischer Probleme, einleitet.

Existiert ein Referenzstimmuster, das der angegebenen Telefonnummer zuordenbar ist, so überprüft die Steuer- und Auswerte-Einheit 8, ob noch weitere Referenzstimmuster im Speicher 9 vorhanden sind, die der angegebenen Telefonnummer zuordenbar sind (Schritt 210 in Fig.3a). Ist dies der Fall, so wird der Teilnehmer 1 über eine Anzeige (Schritt 206 in Fig.3a) auf dem Bildschirm des Terminals 4 zur Eingabe einer ihn identifizierenden Kennung, vorteilhafterweise zur Eingabe seines Namens, aufgefordert. Der Teilnehmer 1 gibt über die Terminaleinheit 4 diese Kennung ein (Schritt 207 in Fig.3a), die daraufhin über das Kommunikationsnetzwerk 3 und die Kommunikationseinheit 5 an die Steuer- und Auswerte-Einheit 8 übermittelt wird. Die Steuer- und Auswerte-Einheit 8 überprüft, ob ein im Speicher 9 abgelegtes Referenzstimmuster existiert, das der angegebenen Kennung zuordenbar ist (Schritt 208 in Fig.3a). Falls dies nicht der Fall ist, so wird das Authentifizierungsverfahren abgebrochen (Schritt 209 in Fig.3a) bzw. der Teilnehmer 1 mit einem Operator verbunden, der gegebenenfalls weitere Schritte, beispielsweise die Beseitigung technischer Probleme, einleitet.

Existiert nur ein Referenzstimmuster im Speicher 9, das der angegebenen Telefonnummer zuordenbar ist, bzw. existiert ein Referenzstimmuster im Speicher 9, das der angegebenen Kennung zuordenbar ist, so wird dieses Referenzstimmuster aus dem Speicher 9 geladen (Schritt 211 in Fig.3a) und der Teilnehmer 1 sofort durch ein Verbindungsmittel 10 des ADL 6 unter der zuvor eingegebenen Telefonnummer angerufen (Schritt 212 in Fig.3a). Die Steuer- und Auswerte-Einheit 8 generiert eine dem Teilnehmer 1 zuvor nicht bekannte Wortfolge, die über die Kommunikationseinheit 5 und das Kommunikationsnetzwerk 3 zur Terminaleinheit 4 übermittelt und auf deren Bildschirm dargestellt wird (Schritt 213 in Fig.3a). Der Teilnehmer 1 spricht die Wortfolge am Telefon 7 als Stimmprobe nach (Schritt 214 in Fig.3a). Die über das Telefonnetz 11 übermittelte und vom Verbindungsmittel empfangene Stimmprobe wird von der Spracheingabeeinheit 12 des ADL 6 digitalisiert. Eine beim ADL 6 implementierte Spracherkennung 13 analysiert, ob sich die digitalisierte Wortfolge aus denselben Wörtern in derselben Reihenfolge zusammensetzt wie die von der Steuer- und Auswerteeinheit 8 generierte Wortfolge (Schritt 215 in Fig.3b). Ist dies nicht der Fall, so wird das Authentifizierungsverfahren abgebrochen (Schritt 216 in Fig.3b) bzw. der Teilnehmer 1 mit einem Operator verbunden, der gegebenenfalls weitere Schritte, beispielsweise die Beseitigung technischer Probleme, einleitet.

Eine beim ADL 6 implementierte textunabhängige Stimmerkennung 14 vergleicht die digitalisierte Wortfolge mit dem Referenzstimmuster des Teilnehmers in Hinblick auf für einen Sprecher charakteristische individuelle Stimmerkmale (Schritt 217 in Fig.3b). Ist die Übereinstimmung zwischen der digitalisierten Wortfolge und dem Referenzstimmuster des Teilnehmers 1 in Hinblick auf für einen Sprecher charakteristische individuelle Stimmerkmale kleiner als ein vorbestimmter Schwellenwert, so wird das Authentifizierungsverfahren abgebrochen (Schritt 216 in Fig.3b) bzw. der Teilnehmer 1 mit einem Operator verbunden, der gegebenenfalls weitere Schritte, beispielsweise die Beseitigung technischer Probleme, einleitet.

Wenn sich die digitalisierte Wortfolge aus denselben Wörtern in derselben Reihenfolge zusammensetzt wie die von der Steuer- und Auswerteeinheit 8 generierte Wortfolge und wenn die Übereinstimmung zwischen der digitalisierten Wortfolge und dem Referenzstimmuster des Teilnehmers in Hinblick auf für einen Sprecher charakteristische individuelle Stimmerkmale größer als ein vorbestimmter Schwellenwert ist, so wird der Teilnehmer 1 für den Geschäftsvorgang authorisiert (Schritt 218 in Fig.3b).

Als weiteres Ausführungsbeispiel wird im folgenden die erfindungsgemäße Authentifizierung eines Teilnehmers 1 am elektronischen Zahlungsverkehr beim Kauf einer Ware über das Internet (als Kommunikationsnetzwerk 3) beschrieben. Nachdem sich der Kunde 1 zum Kauf einer auf der Internet-Seite eines Anbieters 2 angebotenen Ware entschieden hat, und seine Kaufentscheidung, üblicherweise durch Anklicken eines entsprechenden Seiten-Elements mit der Maus seines als Terminaleinheit 4 dienenden Computers oder Internet-Terminals, äußert, stellt der Anbieter eine Online-Verbindung 3 zwischen dem Authentifizierungsdienstleister 6 und dem Computer oder Internet-Terminal 4 des Kunden 1 her. Der Authentifizierungsdienstleister 6 fragt über ein auf dem Bildschirm des Computers oder Internet-Terminals 4 des Kunden 1 erscheinenden Eingabe-Feld die Telefonnummer ab, über welche der Kunde 1 augenblicklich erreichbar ist. In einem weiteren Ausführungsbeispiel der Erfindung fragt der Anbieter 2 über ein auf dem Bildschirm des Computers oder Internet-Terminals 4 des Kunden erscheinenden Eingabe-Feld die Telefonnummer ab, über welche der Kunde 1 augenblicklich erreichbar ist, und übermittelt diese an den Authentifizierungsdienstleister 6.

Sollte die Telefonnummer nicht eindeutig einer beim Authentifizierungdienstleister 6 registrierten Person zuordenbar sein, da sie erstmalig oder von mehreren verschiedenen beim Authentifizierungdienstleister 6 registrierten Personen, beispielsweise mehreren Mitgliedern eines Haushalts, zur Authentifizierung benutzt wird, so fragt der Authentifizierungsdienstleister 6 über den Anbieter 2 oder direkt über den Computer oder das Internet-Terminal 4 des Kunden 1 dessen Namen oder ein anderes ihn identifizierendes Kennwort ab, das im Gegensatz zu den einleitend beschriebenen Paß- und Kennwörtern nicht geheim bleiben muß und insofern offen und verlustsicher an vielerlei Stellen hinterlegt sein kann.

Der Authentifizierungsdienstleister 6 ruft den Kunden 1 unmittelbar nach erfolgter Eingabe der Telefonnummer bzw. der ihn identifizierenden Kennung unter der angegebenen Telefonnummer an und übermittelt diesem einen zur Authentifizierung nachzusprechenden, dem Kunden 1 zuvor nicht bekannten Satz. Der Satz kann zweckmäßigerweise entweder online am Bildschirm des Computers oder Internet-Terminals 4 des Kunden 1 dargestellt oder durch einen Sprachcomputer telefonisch übermittelt werden. Der Kunde 1 spricht den Satz am Telefon 7 als Stimmprobe nach, die vom Authentifizierungsdienstleister 6 digitalisiert und analysiert wird. Ergibt die Analyse, daß sowohl der nachgesprochene mit dem vorgegebenen Satz als auch die Stimmerkmale der aufgezeichneten Probe mit den Stimmerkmalen des beim Authentifizierungsdienstleister gespeicherten Referenzstimmusters des Kunden 1 mindestens zu einem vorbestimmten Grad übereinstimmen, der ein falsches Authentifizierungsergebnis mit hinreichender Wahrscheinlichkeit ausschließt, so übermittelt der Authentifizierungsdienstleister 6 das positive Authentifizierungsergebnis unmittelbar an den Anbieter 2.

Als weiteres Ausführungsbeispiel wird im folgenden die erfindungsgemäße Authentifizierung eines Teilnehmers 1 am elektronischen Zahlungsverkehr beim Kauf einer Ware über das Internet (als Kommunikationsnetzwerk 3) beschrieben. Nachdem sich der Kunde 1 zum Kauf einer auf der Internet-Seite eines Anbieters 2 angebotenen Ware entschieden hat, und seine Kaufentscheidung, üblicherweise durch Anklicken eines entsprechenden Seiten-Elements mit der Maus seines als Terminaleinheit 4 dienenden Computers oder Internet-Terminals, äußert, stellt der Anbieter eine Online-Verbindung 3 zwischen dem Authentifizierungsdienstleister 6 und dem Computer oder Internet-Terminal 4 des Kunden 1 her. Der Authentifizierungsdienstleister 6 fragt über ein auf dem Bildschirm des Computers oder Internet-Terminals 4 des Kunden 1 erscheinenden Eingabe-Feld die Telefonnummer ab, über welche der Kunde 1 augenblicklich erreichbar ist. In einem weiteren Ausführungsbeispiel der Erfindung fragt der Anbieter 2 über ein auf dem Bildschirm des Computers oder Internet-Terminals 4 des Kunden erscheinenden Eingabe-Feld die Telefonnummer ab, über welche der Kunde 1 augenblicklich erreichbar ist, und übermittelt diese an den Authentifizierungsdienstleister 6.

Sollte die Telefonnummer nicht eindeutig einer beim Authentifizierungdienstleister 6 registrierten Person zuordenbar sein, da sie erstmalig oder von mehreren verschiedenen beim Authentifizierungdienstleister 6 registrierten Personen, beispielsweise mehreren Mitgliedern eines Haushalts, zur Authentifizierung benutzt wird, so fragt der Authentifizierungsdienstleister 6 über den Anbieter 2 oder direkt über den Computer oder das Internet-Terminal 4 des Kunden 1 dessen Namen oder ein anderes ihn identifizierendes Kennwort ab, das im Gegensatz zu den einleitend beschriebenen Paß- und Kennwörtern nicht geheim bleiben muß und insofern offen und verlustsicher an vielerlei Stellen hinterlegt sein kann.

Der Authentifizierungsdienstleister 6 ruft den Kunden 1 unmittelbar nach erfolgter Eingabe der Telefonnummer bzw. der ihn identifizierenden Kennung unter der angegebenen Telefonnummer an und übermittelt diesem einen zur Authentifizierung nachzusprechenden, dem Kunden 1 zuvor nicht bekannten Satz. Der Satz kann zweckmäßigerweise entweder online am Bildschirm des Computers oder Internet-Terminals 4 des Kunden 1 dargestellt oder durch einen Sprachcomputer telefonisch übermittelt werden. Der Kunde 1 spricht den Satz am Telefon 7 als Stimmprobe nach, die vom Authentifizierungsdienstleister 6 digitalisiert und analysiert wird. Ergibt die Analyse, daß sowohl der nachgesprochene mit dem vorgegebenen Satz als auch die Stimmerkmale der aufgezeichneten Probe mit den Stimmerkmalen des beim Authentifizierungsdienstleister gespeicherten Referenzstimmusters des Kunden 1 mindestens zu einem vorbestimmten Grad übereinstimmen, der ein falsches Authentifizierungsergebnis mit hinreichender Wahrscheinlichkeit ausschließt, so übermittelt der Authentifizierungsdienstleister 6 das positive Authentifizierungsergebnis unmittelbar an den Anbieter 2.

Beschrieben wird die Authentifizierung des Teilnehmers 1 an einem Geschäftsvorgang bei einem Waren- oder Dienstleistungsanbieter 2 mit Hilfe des in Fig.1 schematisch dargestellten erfindungsgemäßen Systems nach dem in Fig.3a und 3b schematisch dargestellten Ablauf einer weiteren erfindungsgemäßen Ausführungsform des Verfahrens. Nach Start des Authentifizierungsvorgangs (Schritt 201 in Fig.3a) wird über ein Kommunikationsnetzwerk 3 eine Verbindung zwischen einer Terminaleinheit 4 und einer Kommunikationseinheit 5 des Authentifizierungsdienstleisters 6 (ADL) hergestellt (Schritt 202 in Fig.3a). Die Kommunikationseinheit 5 des ADL 6 fordert den Teilnehmer 1 über das Kommunikationsnetzwerk 3 durch eine entsprechende Ausgabe (Schritt 203 in Fig.3a) auf dem Bildschirm der Terminaleinheit 4 auf, die Nummer des Telefonanschlusses 7, unter welcher der Teilnehmer 1 augenblicklich erreichbar ist, einzugeben. Der Teilnehmer 1 gibt über die Terminaleinheit 4 diese Telefonnummer ein (Schritt 204 in Fig.3a), die daraufhin über das Kommunikationsnetzwerk 3 und die Kommunikationseinheit 5 an die Steuer- und Auswerte-Einheit 8 des ADL 6 übermittelt wird. Die Steuer- und Auswerte-Einheit 8 überprüft, ob ein im Speicher 9 abgelegtes Referenzstimmuster existiert, das der angegebenen Telefonnummer zuordenbar ist (Schritt 205 in Fig.3a). Falls dies nicht der Fall ist, wird der Teilnehmer 1 über eine Anzeige (Schritt 206 in Fig.3a) auf dem Bildschirm des Terminals 4 zur Eingabe einer ihn identifizierenden Kennung aufgefordert. Diese Kennung muß im Gegensatz zu den einleitend beschriebenen Paß- und Kennwörtern nicht geheim bleiben und kann insofern offen und verlustsicher an vielerlei Stellen hinterlegt sein. Vorteilhafterweise handelt es sich bei der Kennung um den Namen des Teilnehmers 1. Der Teilnehmer 1 gibt über die Terminaleinheit 4 diese Kennung ein (Schritt 207 in Fig.3a), die daraufhin über das Kommunikationsnetzwerk 3 und die Kommunikationseinheit 5 an die Steuer- und Auswerte-Einheit 8 übermittelt wird. Die Steuer- und Auswerte-Einheit 8 überprüft, ob ein im Speicher 9 abgelegtes Referenzstimmuster existiert, das der angegebenen Kennung zuordenbar ist (Schritt 208 in Fig.3a). Falls dies nicht der Fall ist, so wird das Authentifizierungsverfahren abgebrochen (Schritt 209 in Fig.3a) bzw. der Teilnehmer 1 mit einem Operator verbunden; der gegebenenfalls weitere Schritte, beispielsweise die Beseitigung technischer Probleme, einleitet.

Existiert ein Referenzstimmuster, das der angegebenen Telefonnummer zuordenbar ist, so überprüft die Steuer- und Auswerte-Einheit 8, ob noch weitere Referenzstimmuster im Speicher 9 vorhanden sind, die der angegebenen Telefonnummer zuordenbar sind (Schritt 210 in Fig.3a). Ist dies der Fall, so wird der Teilnehmer 1 über eine Anzeige (Schritt 206 in Fig.3a) auf dem Bildschirm des Terminals 4 zur Eingabe einer ihn identifizierenden Kennung, vorteilhafterweise zur Eingabe seines Namens, aufgefordert. Der Teilnehmer 1 gibt über die Terminaleinheit 4 diese Kennung ein (Schritt 207 in Fig.3a), die daraufhin über das Kommunikationsnetzwerk 3 und die Kommunikationseinheit 5 an die Steuer- und Auswerte-Einheit 8 übermittelt wird. Die Steuer- und Auswerte-Einheit 8 überprüft, ob ein im Speicher 9 abgelegtes Referenzstimmuster existiert, das der angegebenen Kennung zuordenbar ist (Schritt 208 in Fig.3a). Falls dies nicht der Fall ist, so wird das Authentifizierungsverfahren abgebrochen (Schritt 209 in Fig.3a) bzw. der Teilnehmer 1 mit einem Operator verbunden, der gegebenenfalls weitere Schritte, beispielsweise die Beseitigung technischer Probleme, einleitet.

Existiert nur ein Referenzstimmuster im Speicher 9, das der angegebenen Telefonnummer zuordenbar ist, bzw. existiert ein Referenzstimmuster im Speicher 9, das der angegebenen Kennung zuordenbar ist, so wird dieses Referenzstimmuster aus dem Speicher 9 geladen (Schritt 211 in Fig.3a) und der Teilnehmer 1 sofort durch ein Verbindungsmittel 10 des ADL 6 unter der zuvor eingegebenen Telefonnummer angerufen (Schritt 212 in Fig.3a). Die Steuer- und Auswerte-Einheit 8 generiert eine dem Teilnehmer 1 zuvor nicht bekannte Wortfolge, die über die Kommunikationseinheit 5 und das Kommunikationsnetzwerk 3 zur Terminaleinheit 4 übermittelt und auf deren Bildschirm dargestellt wird (Schritt 213 in Fig.3a). Der Teilnehmer 1 spricht die Wortfolge am Telefon 7 als Stimmprobe nach (Schritt 214 in Fig.3a). Die über das Telefonnetz 11 übermittelte und vom Verbindungsmittel empfangene Stimmprobe wird von der Spracheingabeeinheit 12 des ADL 6 digitalisiert. Eine beim ADL 6 implementierte Spracherkennung 13 analysiert, ob sich die digitalisierte Wortfolge aus denselben Wörtern in derselben Reihenfolge zusammensetzt wie die von der Steuer- und Auswerteeinheit 8 generierte Wortfolge (Schritt 215 in Fig.3b). Ist dies nicht der Fall, so wird das Authentifizierungsverfahren abgebrochen (Schritt 216 in Fig.3b) bzw. der Teilnehmer 1 mit einem Operator verbunden, der gegebenenfalls weitere Schritte, beispielsweise die Beseitigung technischer Probleme, einleitet.

Eine beim ADL 6 implementierte textunabhängige Stimmerkennung 14 vergleicht die digitalisierte Wortfolge mit dem Referenzstimmuster des Teilnehmers in Hinblick auf für einen Sprecher charakteristische individuelle Stimmerkmale (Schritt 217 in Fig.3b). Ist die Übereinstimmung zwischen der digitalisierten Wortfolge und dem Referenzstimmuster des Teilnehmers 1 in Hinblick auf für einen Sprecher charakteristische individuelle Stimmerkmale kleiner als ein vorbestimmter Schwellenwert, so wird das Authentifizierungsverfahren abgebrochen (Schritt 216 in Fig.3b) bzw. der Teilnehmer 1 mit einem Operator verbunden, der gegebenenfalls weitere Schritte, beispielsweise die Beseitigung technischer Probleme, einleitet.

Wenn sich die digitalisierte Wortfolge aus denselben Wörtern in derselben Reihenfolge zusammensetzt wie die von der Steuer- und Auswerteeinheit 8 generierte Wortfolge und wenn die Übereinstimmung zwischen der digitalisierten Wortfolge und dem Referenzstimmuster des Teilnehmers in Hinblick auf für einen Sprecher charakteristische individuelle Stimmerkmale größer als ein vorbestimmter Schwellenwert ist, so wird der Teilnehmer 1 für den Geschäftsvorgang authorisiert (Schritt 218 in Fig.3b).

Als weiteres Ausführungsbeispiel wird im folgenden die erfindungsgemäße Authentifizierung eines Teilnehmers 1 am elektronischen Zahlungsverkehr beim Kauf einer Ware über das Internet (als Kommunikationsnetzwerk 3) beschrieben. Nachdem sich der Kunde 1 zum Kauf einer auf der Internet-Seite eines Anbieters 2 angebotenen Ware entschieden hat, und seine Kaufentscheidung, üblicherweise durch Anklicken eines entsprechenden Seiten-Elements mit der Maus seines als Terminaleinheit 4 dienenden Computers oder Internet-Terminals, äußert, stellt der Anbieter eine Online-Verbindung 3 zwischen dem Authentifizierungsdienstleister 6 und dem Computer oder Internet-Terminal 4 des Kunden 1 her. Der Authentifizierungsdienstleister 6 fragt über ein auf dem Bildschirm des Computers oder Internet-Terminals 4 des Kunden 1 erscheinenden Eingabe-Feld die Telefonnummer ab, über welche der Kunde 1 augenblicklich erreichbar ist. In einem weiteren Ausführungsbeispiel der Erfindung fragt der Anbieter 2 über ein auf dem Bildschirm des Computers oder Internet-Terminals 4 des Kunden erscheinenden Eingabe-Feld die Telefonnummer ab, über welche der Kunde 1 augenblicklich erreichbar ist, und übermittelt diese an den Authentifizierungsdienstleister 6.

Sollte die Telefonnummer nicht eindeutig einer beim Authentifizierungdienstleister 6 registrierten Person zuordenbar sein, da sie erstmalig oder von mehreren verschiedenen beim Authentifizierungdienstleister 6 registrierten Personen, beispielsweise mehreren Mitgliedern eines Haushalts, zur Authentifizierung benutzt wird, so fragt der Authentifizierungsdienstleister 6 über den Anbieter 2 oder direkt über den Computer oder das Internet-Terminal 4 des Kunden 1 dessen Namen oder ein anderes ihn identifizierendes Kennwort ab, das im Gegensatz zu den einleitend beschriebenen Paß- und Kennwörtern nicht geheim bleiben muß und insofern offen und verlustsicher an vielerlei Stellen hinterlegt sein kann.

Der Authentifizierungsdienstleister 6 ruft den Kunden 1 unmittelbar nach erfolgter Eingabe der Telefonnummer bzw. der ihn identifizierenden Kennung unter der angegebenen Telefonnummer an und übermittelt diesem einen zur Authentifizierung nachzusprechenden, dem Kunden 1 zuvor nicht bekannten Satz. Der Satz kann zweckmäßigerweise entweder online am Bildschirm des Computers oder Internet-Terminals 4 des Kunden 1 dargestellt oder durch einen Sprachcomputer telefonisch übermittelt werden. Der Kunde 1 spricht den Satz am Telefon 7 als Stimmprobe nach, die vom Authentifizierungsdienstleister 6 digitalisiert und analysiert wird. Ergibt die Analyse, daß sowohl der nachgesprochene mit dem vorgegebenen Satz als auch die Stimmerkmale der aufgezeichneten Probe mit den Stimmerkmalen des beim Authentifizierungsdienstleister gespeicherten Referenzstimmusters des Kunden 1 mindestens zu einem vorbestimmten Grad übereinstimmen, der ein falsches Authentifizierungsergebnis mit hinreichender Wahrscheinlichkeit ausschließt, so übermittelt der Authentifizierungsdienstleister 6 das positive Authentifizierungsergebnis unmittelbar an den Anbieter 2.

In einem weiteren, nicht in den Zeichnungen dargestellten Ausführungsbeispiel der Erfindung ist der Dienstleistungsanbieter eine Online-Bank oder ein Online-Broking-Institut und mit dem Authentifizierungsdienstleister 2 identisch. Die Person 1, die bei der Online-Bank oder dem Online-Broking-Institut ein Wertpapierdepot unterhält, wird beim Einloggen an ihrem Computer oder Internet-Terminal 4 zur Eingabe ihrer Telefonnummer aufgefordert. Vorteilhafterweise ersetzt die Eingabe der Telefonnummer die üblicherweise erforderliche Eingabe der Kunden- bzw. Depotnummer. Sollte die Telefonnummer erstmalig zur Authentifizierung benutzt werden oder mehreren Inhabern verschiedener Depots, beispielsweise mehreren Mitgliedern eines Haushalts, zuordenbar sein, so wird die Person 1 zusätzlich zur Eingabe einer Kennung, beispielsweise ihres Namens oder ihrer Depotnummer aufgefordert. Unmittelbar nachdem der Depotinhaber 1 eindeutig identifiziert ist, erfolgt der Authentifizierungsrückruf unter der eingegebenen Telefonnummer, und ein zur Abgabe einer Stimmprobe nachzusprechender Satz wird übermittelt, d.h. vorzugsweise online auf dem Bildschirm des Computers oder Internet-Terminals 4 des Depotinhabers 1 dargestellt. Der Depotinhaber 1 spricht den Satz am Telefon 7 als Stimmprobe nach, die vom Authentifizierungsdienstleister 6 elektronisch aufgezeichnet und analysiert wird. Ergibt die Analyse, daß sowohl der nachgesprochene mit dem vorgegebenen Satz als auch die Stimmerkmale der aufgezeichneten Probe mit den Referenz-Stimmerkmalen des Depotinhabers 1 übereinstimmen, so wird der Depotzugang freigegeben. Der Authentifizierungsrückruf ersetzt somit die bisher an dieser Stelle übliche Eingabe einer PIN mit den obengeschilderten Nachteilen. Ebenso ersetzt dann ein vor jeder Annahme einer Kaufs- oder Verkaufsorder für Wertpapiere erfolgender Authentifizierungsrückruf nach vorbeschriebenem Muster an die vom Depotinhaber 1 beim Einloggen angegebene Telefonnummer die bisher an dieser Stelle übliche Eingabe einer TAN aus einer zuvor zugesandten Liste. Die eingangs beschriebene Problematik der TAN-Verwaltung entfällt somit.

In einem weiteren, nicht in den Zeichnungen dargestellten Ausführungsbeispiel der Erfindung steht die Terminaleinheit 4 in den Geschäftsräumen des Anbieters 2, beispielsweise in einem Restaurant. Beim Bezahlen wird der Name des Kunden 1 eingegeben und zusammen mit der Telefonnummer des Restaurants an den Authentifizierungsdienstleister 6 übermittelt. Alternativ wird die Nummer des Mobiltelefons 7 des Kunden 1 eingegeben und an den Authentifizierungsdienstleister übermittelt. Dieser ruft unter der angegebenen Nummer zurück und übermittelt einen zur Authentifizierung nachzusprechenden, dem Kunden 1 zuvor nicht bekannten Satz. Der Satz kann zweckmäßigerweise entweder online am Bildschirm der Terminaleinheit 4 dargestellt oder durch einen Sprachcomputer telefonisch übermittelt werden. Der Kunde 1 spricht den Satz am Telefon 7 als Stimmprobe nach, die vom Authentifizierungsdienstleister 6 digitalisiert und analysiert wird. Ergibt die Analyse, daß sowohl der nachgesprochene mit dem vorgegebenen Satz als auch die Stimmerkmale der aufgezeichneten Probe mit den Stimmerkmalen des beim Authentifizierungsdienstleister 6 gespeicherten Referenzstimmusters des Kunden mindestens zu einem vorbestimmten Grad übereinstimmen, so veranlaßt der Authentifizierungsdienstleister 6 die entsprechende Belastung des Kontos des Kunden und übermittelt diesem eine entsprechend E-Mail oder eine Fax-Nachricht als Zahlungsbeleg.

## Patentansprüche

1. Verfahren zur paßwort- und tokenfreien Authentifizierung eines Teilnehmers (1) an einem Geschäftsvorgang bei einem Waren- oder Dienstleistungsanbieter (2)
durch Spracheingabe und Analyse von Stimmerkmalen durch einen Authentifizierungsdienstleister (6),
wobei Authentifizierungsvorgang die Schritte
(a) Eingabe der Telefonnummer (204), über die er augenblicklich erreichbar ist, durch den Teilnehmer (1),
(b) Übermittlung der Telefonnummer des Teilnehmers (1) an den Authentifizierungsdienstleister (6),
(c) zeitnaher Rückruf (212) des Teilnehmers durch den Authentifizierungsdienstleister (6) über die eingegebene Telefonnummer,
(d) Übermittlung einer Wortfolge vom Authentifizierungsdienstleister (6) zum Teilnehmer (213),
(e) zeitnahes Nachsprechen (214) der Wortfolge durch den Teilnehmer (1) am Telefon (7) als Stimmprobe,
(f) Vergleich (215) der gesprochenen Wortfolge mit der vorgegebenen Wortfolge und Vergleich (217) der Stimmprobe des Teilnehmers (1) mit dem als Referenz im Speicher (9) des Authentifizierungsdienstleisters (6) abgelegten Stimmmuster des Teilnehmers (1) in Hinblick auf für einen Sprecher charakteristische individuelle Stimmerkmale,
(g) Einleitung des Geschäftsvorganges, wenn sich die gesprochene Wortfolge aus denselben Wörtern in derselben Reihenfolge zusammensetzt wie die vorgegebene Wortfolge und wenn die Übereinstimmung zwischen der Stimmprobe und dem Referenzstimmuster des Teilnehmers (1) in Hinblick auf für einen Sprecher charakteristische individuelle Stimmerkmale größer als ein vorbestimmter Schwellenwert ist,
aufweist,
und wobei die Wortfolge dem Teilnehmer (1) vor Beginn des jeweiligen Authentifizierungsvorgangs nicht bekannt ist.

2. Verfahren nach Anspruch (1),
**dadurch gekennzeichnet,**
**daß** der Geschäftsvorgang der Kauf einer Ware ist.

3. Verfahren nach Anspruch (1),
**dadurch gekennzeichnet,**
**daß** der Geschäftsvorgang eine Finanz- oder Wertpapier-Transaktion ist.

4. Verfahren nach einem der vorangehenden Ansprüche,
**dadurch gekennzeichnet,**
**daß** der Geschäftsvorgang über das Internet abgewickelt wird.

5. Verfahren nach einem der vorangehenden Ansprüche,
**dadurch gekennzeichnet,**
**daß** die nachzusprechende Wortfolge ein Satz oder eine Satzfolge ist.

6. Verfahren nach einem der vorangehenden Ansprüche,
**dadurch gekennzeichnet,**
**daß** zusätzlich eine Teilnehmer-Kennung vom Teilnehmer (1) zum Authentifizierungsdienstleister (6) übermittelt wird, und daß die als Referenz dienenden Stimmerkmale des Teilnehmers (1) unter dieser Kennung abgelegt sind.

7. Verfahren nach Anspruch 6,
**dadurch gekennzeichnet,**
**daß** die Teilnehmer-Kennung durch Spracheingabe übermittelt wird.

8. Verfahren nach Anspruch 6 oder 7,
**dadurch gekennzeichnet,**
**daß** die Teilnehmer-Kennung der Name des Teilnehmers (1) ist.

9. Verfahren nach einem der vorangehenden Ansprüche,
wobei der Authentifizierungsdienstleister (6) nicht mit dem Waren- oder . Dienstleistungsanbieter (2) identisch ist.

10. Verfahren nach einem der vorangehenden Ansprüche,
**dadurch gekennzeichnet,**
**daß** der Authentifizierungsdienstleister (6) nach erfolgter Authentifizierung auch die Übermittlung beim Authentifizierungsdienstleister (6) hinterlegter, für den Geschäftsvorgang relevanter, teilnehmerbezogener Daten an den Waren- oder Dienstleistungsanbieter (2) oder an ein zusätzlich an dem Geschäftsvorgang beteiligtes Bank- oder Kreditinstitut übermittelt.

11. Verfahren nach einem der Ansprüche 1 bis 8,
**dadurch gekennzeichnet,**
**daß** der Authentifizierungsdienstleister (6) mit dem Bank- oder Kreditkarteninstitut identisch ist, welches das im Rahmen des Geschäftsvorganges zu belastende Konto führt.

12. Verfahren nach einem der vorangegangenen Ansprüche
**dadurch gekennzeichnet,**
**daß** der Authentifizierungsdienstleister (6) nach erfolgter Transaktion eine entsprechende E-Mail oder Fax-Nachricht an den Teilnehmer (1) übermittelt.

13. System zur paßwort- und tokenfreien Authentifizierung eines Teilnehmers (1) an einem Geschäftsvorgang bei einem Waren- oder Dienstleistungsanbieter (2)
durch Spracherkennung und Analyse von Stimmerkmalen,
wobei das System
einen Speicher (9) aufweist, in welchem ein Referenzstimmuster des Teilnehmers (1) gespeichert ist,
ferner eine Kommunikationseinheit (5) aufweist, die während des Authentifizierungsvorgangs über ein Kommunikationsnetzwerk (3) in Verbindung mit einer Terminaleinheit (4) steht und über die Terminaleinheit (4) die Telefonnummer abfragt, unter welcher der zu authentifizierende Teilnehmer (1) augenblicklich zu erreichen ist,
ferner ein Verbindungsmittel (10) aufweist, welches über ein Telefonnetz (11) eine Verbindung zum Teilnehmer (1) unter der über die Terminaleinheit (4) abgefragten Telefonnumer herstellt,
ferner eine Steuer- und Auswerteeinheit (8) aufweist, die eine dem Teilnehmer (1) vor dem Authentifizierungsvorgang nicht bekannte und vom Teilnehmer (1) nachzusprechende Wortfolge generiert und über die Kommunikationseinheit (5) und das Kommunikationsnetzwerk (3) an die Terminaleinheit (4) übermittelt, wo die Wortfolge dargestellt wird,
ferner eine Spracheingabeeinheit (12) aufweist, welche die vom Teilnehmer nachgesprochene, über das Telefonnetz (11) übermittelte und durch das Verbindungsmittel (10) empfangene Wortfolge digitalisiert,
ferner eine textunabhängige Stimmerkennung (14) aufweist, welche die digitalisierte Wortfolge mit dem Referenzstimmuster des Teilnehmers (1) in Hinblick auf für einen Sprecher charakteristische individuelle Stimmerkmale vergleicht,
ferner eine Spracherkennung (13) aufweist, welche analysiert, aus welchen Wörtern sich die digitalisierte Wortfolge zusammensetzt,
und daß die Steuer und Auswerteeinheit (8) die Einleitung des Geschäftsvorgangs freigibt, wenn sich die digitalisierte Wortfolge aus denselben Wörtern in derselben Reihenfolge zusammensetzt wie die von der Steuer- und Auswerteeinheit (8) generierte Wortfolge und wenn die Übereinstimmung zwischen der digitalisierten Wortfolge und dem Referenzstimmuster des Teilnehmers (1) in Hinblick auf für einen Sprecher charakteristische individuelle Stimmerkmale größer als ein vorbestimmter Schwellenwert ist.

14. System nach Anspruch 13,
**dadurch gekennzeichnet,**
**daß** das Kommunikationsnetzwerk (3) das Internet ist.

15. System nach Anspruch 14,
**dadurch gekennzeichnet,**
**daß** die Terminaleinheit (4) der private Computer des Teilnehmers (1) ist.

16. System nach Anspruch 13,
**dadurch gekennzeichnet,**
**daß** das Kommunikationsnetzwerk (3) und das Telefonnetz (11) ein Mobilfunknetz sind.

17. System nach Anspruch 16,
**dadurch gekennzeichnet,**
**daß** die Terminaleinheit (4) in ein Mobiltelefon (7) integriert ist.

18. System nach Anspruch 13 oder 14,
**dadurch gekennzeichnet,**
**daß** die Terminaleinheit (4) sich in den Verkaufs- oder Schalterräumen des Waren- oder Dienstleistungsanbieters (2) befindet.

## Claims

1. Method of verifying a participant (1) in a business transaction in the case of a provider (2) of goods or services in a password- and token-free manner by voice input and analysis of voice features through a verification service provider (6), wherein said verification procedure has the steps
(a) input of the telephone number (204), via which he/she is currently reachable, by the participant (1),
(b) transmission of the telephone number of the participant (1) to the verification service provider (6),
(c) prompt callback (212) of the participant (1) through the verification service provider (6) via the input telephone number,
(d) transmission of a word sequence by the verification service provider (6) to the participant (213),
(e) prompt repeat (214) of the word sequence by the participant (1) on the telephone (7) as voice sample,
(f) comparison (215) of the spoken word sequence with the given word sequence and comparison (217) of the voice sample of the participant (1) with the voice pattern of the participant (1) filed as reference in the memory (9) of the verification service provider (6) with respect to individual voice features characteristic to the participant,
(g) commencement of the business transaction, if the spoken word sequence is composed from the same words in the same sequence as the given word sequence and if the consistency between the voice sample and the reference voice pattern of the participant (1) with respect to individual voice features characteristic to the participant is greater than a predetermined threshold value,
and wherein the word sequence is not known to the participant (1) prior to commencement of the respective verification procedure.

2. Method according to Claim 1, **characterised in that** the business transaction is the purchase of merchandise.

3. Method according to Claim 1, **characterised in that** the business transaction is a financial or securities transaction.

4. Method according to one of the preceding claims, **characterised in that** the business transaction is completed via the internet.

5. Method according to one of the preceding claims, **characterised in that** the word sequence to be repeated is a phrase or phrase sequence.

6. Method according to one of the preceding claims, **characterised in that** a participant identification is additionally transmitted to the verification service provider (6) by the participant (1), and that the voice features of the participant (1) serving as reference are filed under this identification.

7. Method according to Claim 6, **characterised in that** the participant identification is transmitted via voice input.

8. Method according to Claim 6 or 7, **characterised in that** the participant identification is the name of the participant (1).

9. Method according to one of the preceding claims, wherein the verification service provider (6) is not identical to the provider (2) of goods or services.

10. Method according to one of the preceding claims, **characterised in that** after verification has occurred, the verification service provider (6) also transmits the transmission of participant-related data, which are relevant to the business transaction and filed with the verification service provider (6), to the provider (2) of goods and services or to a bank or credit institution additionally participating in the business transaction.

11. Method according to one of Claims 1 to 8, **characterised in that** the verification service provider (6) is identical to the bank or credit institution, which manages the account to be charged as part of the business transaction.

12. Method according to one of the preceding claims, **characterised in that** after the transaction has been completed, the verification service provider (6) transmits a corresponding email or fax notification to the participant (1).

13. System for verifying a participant (1) in a business transaction in the case of a provider (2) of goods or services in a password- and token-free manner by voice recognition and analysis of voice features, wherein the system
has a memory (9), in which a reference voice pattern of the participant (1) is stored,
additionally has a communication unit (5), which is connected to a terminal unit (4) via a communication network (3) during the verification procedure and via the terminal unit (4) scans the telephone number, at which the participant (1) to be verified is currently to be reached,
additionally has a connection means (10), which creates a connection to the participant (1) via a telephone network (11) at the telephone number scanned via the terminal unit (4),
additionally has a control and evaluation unit (8), which generates a word sequence not known to the participant (1) prior to the verification procedure and to be repeated by the participant (1), and via the communication unit (5) and the communication network (3) transmits it to the terminal unit (4) where the word sequence is displayed,
additionally has a voice input unit (12), which digitises the word sequence repeated by the participant, transmitted via the telephone network (11) and received by the connection means (10),
additionally has a voice recognition means (14) independent of text, which compares the digitised word sequence with the reference voice pattern of the participant (1) with respect to individual voice features characteristic to a speaker,
additionally has a voice recognition means (13), which analyses from which words the digitised word sequence is composed,
and that the control and evaluation unit (8) enables commencement of the business transaction, if the digitised word sequence is composed from the same words in the same sequence as the word sequence generated by the control and evaluation unit (8), and if the consistency between the digitised word sequence and the reference voice pattern of the participant (1) with respect to individual voice features characteristic to a speaker is greater than a predetermined threshold value.

14. System according to Claim 13, **characterised in that** the communication network (3) is the internet.

15. System according to Claim 14, **characterised in that** the terminal unit (4) is the private computer of the participant (1).

16. System according to Claim 13, **characterised in that** the communication network (3) and the telephone network (11) are a mobile radio network.

17. System according to Claim 16, **characterised in that** the terminal unit (4) is integrated into a mobile telephone (7).

18. System according to Claim 13 or Claim 14, **characterised in that** the terminal unit (4) is located in the sales or counter areas of the provider (2) of goods and services.

## Revendications

1. Procédé d'authentification sans mot de passe ou indice d'un participant (1) à des transactions commerciales auprès d'un prestataire de biens ou de services (2) par entrée de données vocales et analyse des caractéristiques vocales par l'intermédiaire d'un prestataire de services d'authentification (6),
dans lequel le procédé d'authentification comprend les étapes de :
(a) remise par le participant (1), du numéro de téléphone (204) grâce auquel il est possible de le joindre instantanément,
(b) communication du numéro de téléphone du participant (1) au prestataire de services d'authentification (6),
(c) rappel dans un délai court (212) du participant par le prestataire de services d'authentification (6) à l'aide du numéro de téléphone remis,
(d) communication d'une suite de mots par le prestataire de services d'authentification (6) au participant (213),
(e) répétition dans un délai court (214) par le participant (1) de la suite de mots au téléphone (7) pour échantillon de voix,
(f) comparaison (215) de la suite de mots énoncée à la suite de mots allouée et comparaison (217) de l'échantillon de voix du participant (1) au modèle de voix du participant (1) déposé comme référence dans la base de mémoire (9) du prestataire de services d'authentification (6) pour reconnaissance des caractéristiques individuelles spécifiques de la voix du locuteur,
(g) initialisation des transactions commerciales, lorsque la suite de mots énoncée est composée des mêmes termes et dans le même ordre que la suite de mots allouée, et lorsque la concordance entre l'échantillon de voix et le modèle de référence du participant (1) est supérieure à une valeur seuil prédéterminée en ce qui concerne les caractéristiques individuelles spécifiques de la voix du locuteur,
et dans lequel la suite de mots n'est pas connue du participant (1) avant le début de la procédure d'authentification correspondante.

2. Procédé selon la revendication 1, **se caractérisant par le fait que** la transaction commerciale est constituée par l'achat d'un bien.

3. Procédé selon la revendication 1, **se caractérisant par le fait que** la transaction commerciale est constituée d'une transaction financière ou boursière.

4. Procédé selon l'une des revendications précédentes, **se caractérisant par le fait que** la transaction commerciale se déroule sur Internet.

5. Procédé selon l'une des revendications précédentes, **se caractérisant par le fait que** la suite de mots à répéter est constituée d'une phrase ou d'une suite de phrases.

6. Procédé selon l'une des revendications précédentes, **se caractérisant par le fait qu'**additionnellement un élément d'identification du participant est communiqué par le participant (1) au prestataire de services d'authentification (6), et que les caractéristiques vocales du participant (1) faisant office de référence sont enregistrées sous cet élément d'identification.

7. Procédé selon la revendication 6, **se caractérisant par le fait que** l'élément d'identification du participant est communiqué oralement.

8. Procédé selon la revendication 6 ou 7, **se caractérisant par le fait que** l'élément d'identification du participant est constitué du nom du participant (1).

9. Dispositif selon l'une des revendications précédentes, dans lequel le prestataire de services d'authentification (6) n'est pas identique au prestataire de biens ou de services (2).

10. Procédé selon l'une des revendications précédentes, **se caractérisant par le fait que** le prestataire de services d'authentification (6) communique aussi, après réussite de l'authentification (6), les données relatives au participant et pertinentes pour la transaction commerciale de la communication consignée auprès du prestataire de services d'authentification, au prestataire de biens ou de services (2) ou à l'institution bancaire ou de crédit participant à la transaction commerciale.

11. Procédé selon l'une des revendications 1 à 8, **se caractérisant par le fait que** le prestataire de services d'authentification (6) et l'institution bancaire ou de crédit ne représentent qu'une seule entité, par laquelle est donné l'accès au compte à débiter dans le cadre de la transaction commerciale.

12. Procédé selon l'une des revendications précédentes, **se caractérisant par le fait que** le prestataire de services d'authentification (6) fait parvenir un courrier électronique ou un fax d'information au participant (1) après réussite de la transaction.

13. Système d'authentification sans mot de passe ou indice d'un participant (1) à des transactions commerciales auprès d'un prestataire de biens ou de services (2) par reconnaissance de données vocales et analyse des caractéristiques vocales, dans lequel le système,
comprend une base de mémoire (9) dans laquelle un modèle de référence de la voix du participant (1) a été sauvegardé,
comprend en outre un module de communication (5), qui reste en liaison durant la procédure d'authentification avec un terminal (4) par
l'intermédiaire d'un réseau de communication (3) et demande par l'intermédiaire du terminal (4) le numéro de téléphone grâce auquel il est possible de joindre immédiatement le participant (1),
comprend en outre un dispositif de connexion (10), établissant une communication avec le participant (1) par l'intermédiaire du réseau téléphonique (11) à l'aide du numéro de téléphone demandé par le terminal (4),
comprend en outre une unité de commande et de contrôle (8), qui génère une suite de mots inconnue du participant (1) avant la procédure d'authentification et devant être répétée par le participant (1), et la communique par l'intermédiaire du module de communication (5) et du réseau de communication (3) au terminal (4) où la suite de mots sera constituée,
comprend en outre une unité d'entrée des données vocales (12), qui numérise la suite de mots répétée par le participant, communiquée par réseau téléphonique (11) et reçue par le dispositif de connexion (10),
comprend en outre un dispositif de reconnaissance vocale indépendamment du texte (14), qui compare la suite de mots numérisée au modèle de référence du participant (1) pour reconnaissance des caractéristiques individuelles spécifiques de la voix du locuteur,
comprend en outre un dispositif de reconnaissance de la parole (13), qui analyse de quels mots se compose la suite de mots numérisée,
et qui permet à l'unité de commande et de contrôle (8) l'initialisation des transactions commerciales, lorsque la suite de mots numérisée est composée des mêmes termes et dans le même ordre que la suite de mots générée par l'unité de commande et de contrôle (8) et lorsque la concordance entre la suite de mots numérisée et le modèle de référence du participant (1) est supérieure à une valeur seuil prédéterminée en ce qui concerne les caractéristiques individuelles spécifiques de la voix du locuteur.

14. Système selon la revendication 13, **se caractérisant par le fait que** le réseau de communication (3) est représenté par l'Internet.

15. Système selon la revendication 14, **se caractérisant par le fait que** le terminal (4) est constitué de l'ordinateur personnel du participant (1).

16. Système selon la revendication 13, **se caractérisant par le fait que** le réseau de communication (3) et le réseau téléphonique (11) sont constitués d'un réseau de téléphonie mobile.

17. Système selon la revendication 16, **se caractérisant par le fait que** le terminal (4) est intégré à un téléphone portable (7).

18. Système selon la revendication 13 ou 14, **se caractérisant par le fait que** le terminal (4) se trouve dans l'espace commercial ou de guichets du prestataire de biens ou de services (2).
